# EUROPÄISCHE PATENTSCHRIFT

(11) **EP 0 712 567 B1**
(45) Veröffentlichungstag und Bekanntmachung des Hinweises auf die Patenterteilung: **11.08.1999**
(21) Anmeldenummer: 95116948.1
(22) Anmeldetag: 27.10.1995
(51) Int. Cl.: A01D 45/02

(54) **Schneid- u. Förderwerk für stengelige Erntegüter**
Device for mowing and conveying stalk crops
Dispositif pour faucher et transporter des plantes à tige

(30) Priorität: 18.11.1994 DE 4441074; 23.09.1995 DE 19535453; 18.11.1994 DE 4441078; 23.09.1995 DE 19535454
(43) Veröffentlichungstag der Anmeldung: 22.05.1996
(73) Patentinhaber: CLAAS SAULGAU GMBH, D-88340 Saulgau (DE)
(72) Erfinder: Arnold, Rudolf, D-88348 Saulgau (DE); Wicker, Anton, D-88348 Saulgau-Bogenweiler (DE); Rauch, Hans, D-88348 Saulgau-Kleintissen (DE); Gebele, Josef, D-88374 Hüttenreute/Hosskirch (DE)

(56) Entgegenhaltungen:
- EP-A- 0 099 527
- EP-A- 0 286 882
- EP-A- 0 673 594
- DE-U- 9 109 490
- FR-A- 2 408 993
- FR-A- 2 559 995

## Beschreibung

Die Erfindung bezieht sich auf ein Schneid- und Förderwerk für stengelige Erntegüter, insbesondere für Mais, nach dem Gattungsbegriff der Ansprüche 1 und 6.

Ein Schneid- und Förderwerk nach dem Gattungsbegriff des Anspruches 1 ist aus der Europäischen Patentanmeldung 0 286 882 bekannt. Hier sind Schneid- und Fördertrommeln vorhanden, die im unteren Teil mit einer mit zahlreichen Messern versehenen Schneidscheibe und darüber mit in mehreren Ebenen koaxial umlaufenden Förderzinken ausgestattet sind. Damit die Förderzinken die abgeschnittenen Maisstengel während des Umlaufes nicht verlieren, sind die Spitzen der Förderzinken gegenüber der Radialen in Umlaufrichtung nach vorne geneigt, und müssen deshalb an der Abgabestelle mittels gegenläufig umlaufender Werkzeuge, die mit Fingern besetzt sind, ausgeräumt werden. Diese Finger haben in dem Bereich, in dem sie mit den Förderzinken zusammenwirken, eine Geschwindigkeitskomponente, die auf die Förderzinken zu gerichtet ist und die bewirkt, daß die Maisstengel an die fördernde Fläche der Förderzinken angedrückt werden. Das hat zur Folge, daß die Maisstengel nur unter Zwang aus den Förderzinken ausgeräumt werden, und daß man mit der Formgebung der Förderzinken zum Nachteil einer sicheren Förderung der Maisstengel während des Umlaufes sehr eingeschränkt ist.

Aus dem deutschen Gebrauchsmuster G 91 09 490.9 ist außerdem ein von einer zwischen einer Förderscheibe, deren Drehachse mit der Achse einer rotierenden Messerscheibe zusammenfällt und einem außerhalb der Förder- und Schneidscheiben angeordneten Kettenrad umlaufenden Kette gebildeter Ausräumer bekannt, dessen Mitnehmer das Erntegut aus den Taschen der Förderscheiben ausschieben. Die spitzwinklige Zuordnung der Kette zum Umfangskreis der Förderscheibe und die unter annähernd gleichem Winkel geneigte Rückseite der auf der Kette angeordneten Mitnehmer führt neben der radial zum Umfangskreis der Förderscheibe gerichteten Gutbewegung über einen weiten Bereich auch zu tangentialer Gutmitnahme, so daß die Finger der Förderscheibe und die dazugehörenden Mitnehmer der Kette über einen längeren Zeitraum eine Wirkpaarung mit dem im entsprechenden Mitnehmer-Zwischenraum befindlichen Erntegut eingehen. Dies führt zu einer Beeinträchtigung des Guttransportes.

Der Erfindung liegt deshalb die Aufgabe zugrunde, die aus dem Stand der Technik bekannten Schwierigkeiten beim Ausräumen von Fördertaschen rotierender Förderorgane zu beheben, und außerdem einen weiteren Gestaltungsspielraum für die Formgebung der Förderzinken zu eröffnen.

Erfindungsgmäß wird hierzu vorgeschlagen, daß die Drehachse des rotierenden Ausräumers innerhalb des Umkreises der zugehörigen Förderscheibe liegt, und daß er im gleichen Drehsinn wie diese angetrieben wird. Dabei ist es vorteilhaft, wenn der Ausräumer als eine mit Zähnen versehene Scheibe ausgeführt ist, die unter oder über der zugehörigen Förderscheibe angeordnet ist. Weiter ist es zweckmäßig, wenn jeder Förderscheibe ein eigener Ausräumer zugeordnet ist.

Besonders günstig ist es, wenn zwei im wesentlichen gleich ausgestaltete Förderscheiben vorhanden sind, deren zugehörige Ausräumer zwischen beiden Förderscheiben angeordnet sind. Die untere Scheibe übernimmt dann den Transport der Stengelfüße, während die obere Förderscheibe den Hauptteil der Stengelmasse fördert, wobei sich der Stengel sogar auf der Oberseite der Förderscheibe abstützen kann.

Die Anordnung von Förderscheiben und Ausräumern nach der Erfindung ergibt eine so wirkungsvolle Ausräumung der Förderscheiben, daß die Förderzinken so ausgestaltet werden können, daß zwei benachbarte Förderzinken eine nach außen hin offene Tasche bilden, wodurch die Stengel besonders sicher gefördert werden.

Die Ausgestaltung der Förderscheiben und der Ausräumer erlaubt es, mit einer einfachen senkrechten Wand einen Förderkanal zu bilden, in dem im wesentlichen die Stengelfüße zwangsgefördert werden.

Eine andere Schneid- und Fördervorrichtung nach dem Gattungsbegriff des Anspruches 6 ist aus der Europäischen Patentanmeldung 0 099 527 bekannt geworden. Bei dieser Schutzrechts-Anmeldung sind umlaufende Schneidscheiben und koaxiale Förderscheiben vorhanden, die gleichsinnig, aber mit erheblich unterschiedlichen Umfangsgeschwindigkeiten rotieren. Die abgeschnittenen Halmgut-Stengel werden in Ausbuchtungen zwischen benachbarten Förderzinken aufgenommen und darin bis zu einer Abgabestelle gefördert. Um die Halme während des Transportes in den Ausbuchtungen festzuhalten, sind nach der Europäischen Offenlegungsschrift 0 099 527 stationäre Teilerspitzen, die durch Führungsteile überbrückt sind, vorgesehen, die auch die Aufgabe haben, von weiter entfernten Schnittstellen kommendes Erntegut zu überführen. Diese Art der Unterteilung der Schnittbreite in mehrere Arbeitsbereiche mit breiten Abteilern und hakenförmigen Führungsteilen hat mancherlei Nachteile. Stengel, die nicht gerade in den Schneidspalt einlaufen, werden von den Abteilerspitzen abgedrückt und schräg abgeschnitten. Auch behindern die hakenförmigen Führungsteile den Schnittvorgang selbst, besonders bei feinhalmigem Erntegut.

Zweck der gegenwärtigen Erfindung ist es somit auch, bei einer solchen Schneid-und Fördervorrichtung die beschriebenen Nachteile zu vermeiden und neben einer Formgebung für die Förderzinken auch einen weiteren Gestaltungsspielraum für die Schneideinrichtung zu schaffen. Erfindungsgemäß ist hierzu vorgeschlagen, daß keine stationären Führungsteile vorhanden sind, sondern daß am Umfang der Schneidscheibe an deren Oberseite in Abständen hochkant stehende Fangstreifen befestigt sind, die in einem flachen Winkel zur Tangente verlaufen, wobei der vorauslaufende Anfang der Fangstreifen radial weiter außen liegt als das nachlaufende Ende. Die abgeschnittenen Stengel werden dadurch in die Ausbuchtungen zwischen den Förderzinken eingeleitet und durch nachfolgende Fangstreifen auch darin festgehalten.

Nach einem Merkmal der Erfindung sollen die Fangstreifen an ihrem vorauslaufenden Anfang bis in den Bereich der Schneidmesser und an ihrem nachlaufenden Ende bis in den Bereich der Ausbuchtungen in der Förderscheibe reichen.

Es ist weiterhin erfindungserheblich, daß die Ausbuchtungen der Förderscheiben so ausgewölbt sind, daß ein heranbewegter Halmgut-Stengel von den Fangstreifen leicht in die Ausbuchtungen hineingeleitet und bei weiterdrehender Förderscheibe die Tendenz hat, darin zu verharren, weil sich die Wölbung der Ausbuchtung bis zur Spitze des Förderzinkens fortsetzt und den Halmgut-Stengel teilweise umschließt.

Mit Ausführungen nach den Ansprüchen 11 - 13 wird erreicht, daß die stengeligen Erntegüter mit Sicherheit in die zwischen den Förderzinken gebildeten Taschen (Ausbuchtungen) der Förderscheiben eingeführt werden und es wird sichergestellt, daß bei übereinander angeordneten Förderscheiben jede Pflanze nur in senkrecht übereinander liegenden Taschen der Förderscheiben transportiert werden.

Die Erfindung wird anhand von zwei Abbildungen beispielsweise erläutert:
- Figur 1: zeigt von einem Maiserntegerät ein einzelnes Schneid- und Förderwerk in einer schematischen Ansicht von oben,

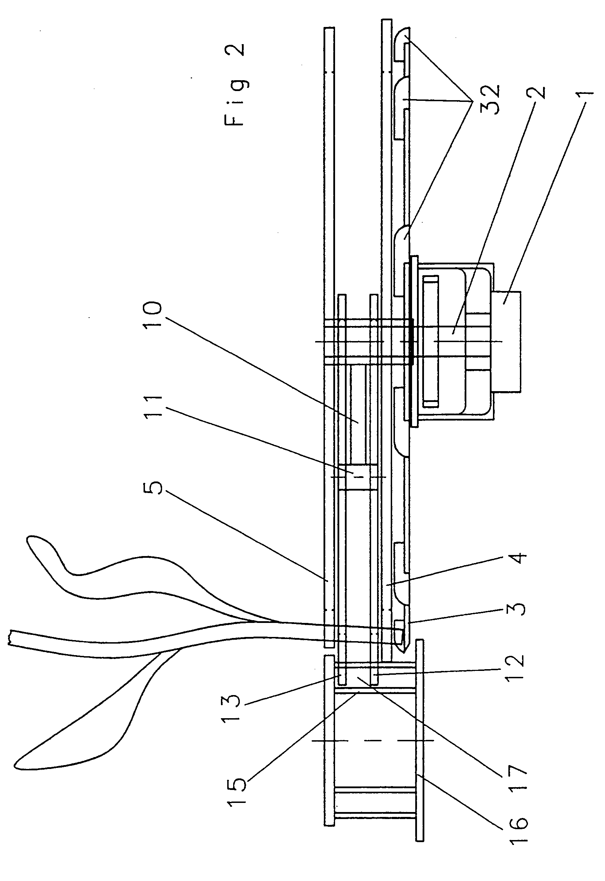

- Figur 2: zeigt den gleichen Gegenstand im Schnitt A - A der Figur 1

An einem schuhförmigen Teil (1) des Maschinenrahmens ist auf einer etwa senkrecht stehenden Welle (2) eine Schneidscheibe (3) gelagert, die durch nicht dargestellte Antriebsmittel angetrieben wird. Koaxial zu der Schneidscheibe (3) sind zwei Förderscheiben (4, 5) gelagert, die im Sinne des Pfeiles B angetrieben werden. Die Förderscheiben (4, 5) haben an ihrem Umfang eine Vielzahl von nach außen offenen Ausbuchtungen (6), zwischen denen jeweils ein Förderzinken (7) stehenbleibt. Die fördernde Flanke (8) ist so geformt, daß ihre äußere Spitze gegenüber der Radialen in Drehrichtung vorläuft. Die nicht fördernde Flanke (9) der Förderzinken (7) dient dazu, den Stengelfuß abzustützen, so daß er innerhalb der offenen Ausbuchtungen (6) der oberen Förderscheibe (5) und der unteren Förderscheibe (4) so festgehalten wird, daß er nicht völlig umfallen kann.

Für eine sichere Einführung der Halmgut-Stengel in die Ausbuchtungen (6) der Förderscheiben (4, 5) sind die Förderzinken (7) an ihrer nach außen gerichteten Stirnseite (19) mit einer Einlauffläche versehen, die mit ihrer in Drehrichtung nachlaufenden Kante (20) radial weiter innen liegt, als die vorauslaufende Spitze (21) des benachbarten nachfolgenden Förderzinkens (7).

Für eine unverkantete Einführung der Halmgut-Stengel in koaxial übereinander liegende Ausbuchtungen (6) von zwei oder mehreren zusammengehörigen Förderscheiben (4, 5) kann es bei in Fahrtrichtung schräg nach vorne geneigten Arbeitslage des Vorsatzgerätes sinnvoll sein, daß die übereinander liegenden Förderzinken (7) so in Drehrichtung versetzt zueinander sind, daß der obere Förderzinken (7) gegenüber dem unteren Förderzinken (7) um ein geringes Maß vorläuft.

Eine etwa senkrechte Wand (15) ist so an den Umkreis der Förderscheiben (4, 5) angepaßt, daß ein Förderkanal (17) gebildet wird.

Zwischen den Förderscheiben (4, 5) sind mittels eines maschinenfesten Antriebsgehäuses (10) zwei um eine etwa senkrechte Achse (11) dreh- und antreibbar gelagerte Ausräumer (12, 13) angeordnet. Die Ausräumer (12, 13) sind scheibenförmig und haben an ihrem Umfang eine Vielzahl von Zähnen (14), die auf einem Teil ihres Umlaufes die offenen Taschen (6) der Förderscheiben (4, 5) völlig überdecken. Die Ausräumer (12, 13) werden im Sinne des Pfeiles C so angetrieben, daß ihre Umfangsgeschwindigkeit gleich oder etwas größer wie der der Förderscheiben (4, 5) ist. Eine etwa senkrechte Wand (15) mit einem Boden (16) ist so an die Umkreise der Förderscheiben (4, 5) und der Ausräumer (12, 13) angepaßt, daß ein Förderkanal (17) gebildet wird.

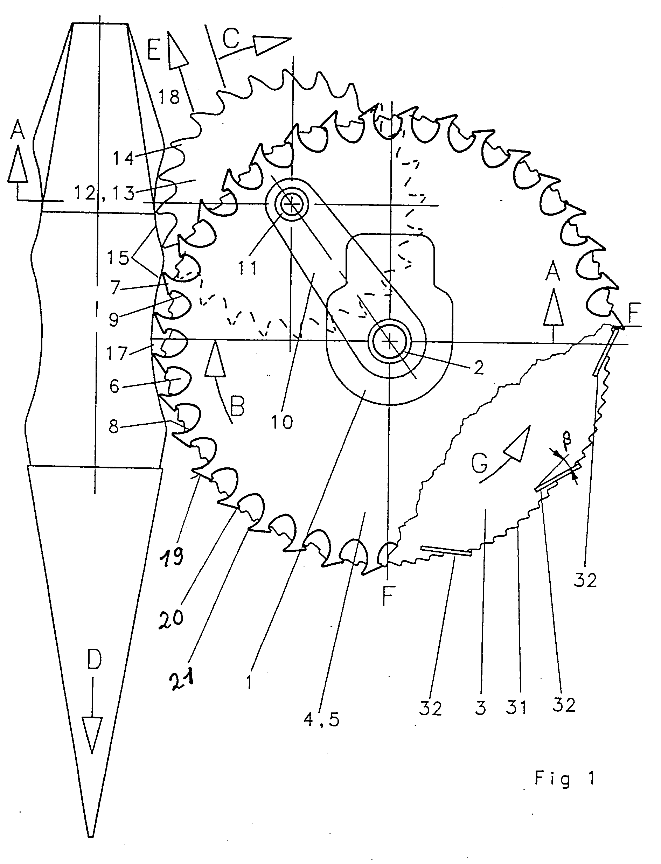

Die Förderscheiben (4, 5) sind im Bereich F - F (Figur 1) aufgeschnitten gezeichnet, so daß die Schneidscheibe (3) sichtbar wird. Die Schneidscheibe (3) hat an ihrem Umfang eine Vielzahl von Schneidmessern (31). Auf der Oberseite der Schneidscheibe (3), die im Beispiel in Richtung des Pfeiles G angetrieben wird, ist eine Anzahl von Fangstreifen (32) befestigt, die in einem flachen Winkel β zu der Tangente stehen.

Beim Betrieb bewegt sich das Maiserntegerät in Richtung des Pfeiles D. Die auf dem Feld stehenden Maisstengel werden von der Schneidscheibe (3) abgetrennt und unmittelbar danach von einem der Fangstreifen (32) erfaßt und radial nach innen bewegt, so daß sie in eine der Ausbuchtungen (6) der Förderscheiben (4, 5) eingeführt und in diesen in Richtung des Pfeiles B weitergefördert werden, bis sie in den Bereich der Zähne (14) der Ausräumer (12, 13) gelangen. Die Zähne (14) befördern in ihrer Umlaufrichtung die Maisstengel aus den offenen Taschen (6) heraus und bringen sie in einen offenen Trog (18), von dem aus sie durch nicht dargestellte Fördermittel in Richtung des Pfeiles E einem Feldhäcksler zugeführt werden.

## Patentansprüche

1. Schneid- und Förderwerk für stengelige Erntegüter mit mindestens einer Schneidscheibe und einer oder mehreren dazu koaxialen Förderscheiben mit einer Vielzahl von an deren Umfang angeordneten Förderzinken, denen an der Abgabestelle ein rotierender, mit den Förderscheiben gleichgerichtet umlaufender, innerhalb des Umkreises der zugehörigen Förderscheiben gelagerter Ausräumer zugeordnet ist,
dadurch gekennzeichnet,
daß der Ausräumer (12,13) als eine mit Zähnen (14) versehene Scheibe ausgeführt ist, deren Zähne (14) auf einem Teil ihres Umlaufes die durch die Förderzinken (7) gebildeten offenen Taschen (6) der Förderscheiben (4, 5) völlig überdecken.

2. Schneid- und Förderwerk nach Anspruch 1,
dadurch gekennzeichnet,
daß für jede Förderscheibe (4, 5) ein eigener Ausräumer (12, 13) vorhanden ist.

3. Schneid- und Förderwerk nach den Ansprüchen 1 und 2,
dadurch gekennzeichnet,
daß zwei im wesentlichen gleich ausgestaltete, koaxiale Förderscheiben (4, 5) im Abstand zueinander angeordnet sind, wobei die zugehörigen Ausräumer (12, 13) zwischen den beiden Förderscheiben (4, 5) angeordnet sein können.

4. Schneid- und Förderwerk nach den Ansprüchen 1 - 3,
dadurch gekennzeichnet,
daß den Förderscheiben (4, 5) und deren Ausräumern (12, 13) etwa senkrecht zu der Ebene der Förderscheiben (4, 5) eine einen Förderkanal (17) bildende, in Kleinem Abstand zu den Förderscheiben (4, 5) und den Ausräumern (12, 13) verlaufende feststehende Wand (15) zugeordnet ist.

5. Schneid- und Fördervorrichtung für stengeliges Halmgut mit mindestens einer rotierenden, am Umfang mit Messern (31) versehenen Schneidscheibe (3) und einer oder mehreren darüber angeordneten, am Umfang mit Förderten (7) und Fördertaschen (6) ausgestatteten Förderscheiben (4, 5), wobei die Schneidscheibe (3) und die Förderscheiben (4, 5) mit unterschiedlichen Umfangsgeschwindigkeiten rotieren,
dadurch gekennzeichnet,
daß am Umtang der Schneidscheibe (3) an deren Oberseite in Abständen zueinander hochkant stehende Fangstreifen (32) befestigt sind, die in einem flachen Winkel β zur Tangente verlaufen, wobei der vorauslaufende Anfang der Fangstreifen (32) radial weiter außen liegt, als das nachlaufende Ende.

6. Schneid- und Fördervorrichtung nach Anspruch 5,
dadurch gekennzeichnet,
daß die Fangstreifen (32) an ihrem vorauslaufenden Anfang bis in den Bereich der Schneidmesser (31) und an ihrem nachlaufenden Ende bis in den Bereich der Ausbuchtungen (6) der Förderscheiben (4, 5) reichen.

7. Schneid- und Förderwerk nach den Ansprüchen 1 bis 6,
dadurch gekennzeichnet,
daß benachbarte Förderzinken (7) der Förderscheiben (4, 5) mit ihrer fördernden Flanke (8) und der nicht fördernden Flanke (9) eines benachbarten Förderzinkens (7) eine zum Umfang der Förderscheibe (4, 5) hin offene Tasche (6) in Form von Ausbuchtungen (6) bilden, die so ausgewölbt sind, daß ein heranbewegter Halmgutstengel von den Fangstreifen (32) leicht in eine Ausbuchtung (6) hineingeleitet wird und bei weiterer Drehung der Förderscheiben (4, 5) die Tendenz hat, darin zu verharren, weil sich die Wölbung der Ausbuchtung (6) bis zur Spitze des Förderzinkens (7) fortsetzt und den Halmgutstengel teilweise umschließt.

8. Schneid- und Förderwerk nach Anspruch 7,
dadurch gekennzeichnet,
daß die Förderzinken (7) mit ihrer fördernden Flanke (8) so geformt sind, daß deren äußere Spitze gegenüber der Radialen in Drehrichtung vorläuft.

9. Schneid- und Förderwerk nach den Ansprüchen 7 und 8,
dadurch gekennzeichnet,
daß die Förderzinken (7) mit ihrer nichtfördernden Flanke (9) so geformt sind, daß deren äußere Spitze gegenüber der Radialen in Drehrichtung nachläuft.

10. Schneid- und Förderwerk nach den Ansprüchen 7 - 9,
dadurch gekennzeichnet,
daß die Förderzinken (7) mit ihrer nach außen gerichteten Stirnseite (19) eine Einlauffläche für das stengelige Erntegut bilden, die mit ihrer in Drehrichtung nachlaufenden Kante (20) radial weiter innen liegt, als die vorauslaufende Spitze (21) des benachbarten nachfolgenden Förderzinkens (7).

11. Schneid- und Förderwerk nach einem oder mehreren der Ansprüche 1 - 10,
dadurch gekennzeichnet,
daß bei koaxial übereinander angeordneten Förderscheiben (4, 5) die jeweils zusammen fördernden Förderzinken (7) in Drehrichtung um ein geringes Maß versetzt zueinander sind.

12. Schneid- und Förderwerk nach einem oder mehreren der Ansprüche 1 - 11,
dadurch gekennzeichnet,
daß bei koaxial übereinander angeordneten Förderscheiben (4, 5) die jeweils zusammen fördernden Förderzinken (7) so in Drehrichtung versetzt zueinander sind, daß der obere Förderzinken (7) gegenüber dem unteren Förderzinken (7) um ein geringes Maß vorläuft.

## Claims

1. A cutting and conveyor mechanism for stalk crop materials having at least one cutting disc and one or more conveyor discs coaxial with respect thereto with a plurality of conveyor prongs which are arranged at the periphery thereof and with which there is associated at the discharge location a rotary clearing device which rotates in the same direction as the conveyor discs and which is mounted within the circumference of the associated conveyor discs, characterised in that the clearing device (12, 13) is in the form of a disc which is provided with teeth (14) and whose teeth on a part of the rotational movement thereof completely overlap the open pockets (6) of the conveyor discs (4, 5), which are formed by the conveyor prongs (7).

2. A cutting and conveyor mechanism according to claim 1 characterised in that there is a specific clearing device (12, 13) for each conveyor disc (4, 5).

3. A cutting and conveyor mechanism according to claims 1 and 2 characterised in that two coaxial conveyor discs (4, 5) of substantially the same configuration are arranged at a spacing relative to each other, wherein the associated clearing devices (12, 13) can be arranged between the two conveyor discs (4, 5).

4. A cutting and conveyor mechanism according to claims 1 to 3 characterised in that associated with the conveyor discs (4, 5) and their clearing devices (12, 13) approximately perpendicularly to the plane of the conveyor discs (4, 5) is a fixed wall (15) which forms a conveyor passage (17) and which extends at a small spacing relative to the conveyor discs (4, 5) and the clearing devices (12, 13).

5. A cutting and conveyor apparatus for stalk harvest material having at least one rotating cutting disc (3) provided at the periphery with blades (31) and one or more conveyor discs (4, 5) which are arranged thereabove and which are provided at the periphery with conveyor prongs (7) and conveyor pockets (6), wherein the cutting disc (3) and the conveyor discs (4, 5) rotate at different peripheral speeds, characterised in that secured to the periphery of the cutting disc (3) at the top side thereof at spacings relative to each other are catch strips (32) which are disposed in an on-edge position and which extend at a shallow angle β relative to the tangent, wherein the leading end of the catch strips (32) is disposed radially further outwardly than the trailing end.

6. A cutting and conveyor apparatus according to claim 5 characterised in that at their leading end the catch strips (32) extend into the region of the cutting blades (31) and at their trailing end they extend into the region of the recesses (6) in the conveyor discs (4, 5).

7. A cutting and conveyor mechanism according to claims 1 to 6 characterised in that adjacent conveyor prongs (7) of the conveyor discs (4, 5) form with their conveying flank (8) and the non-conveying flank (9) of an adjacent conveyor prong (7) a pocket (6) which is open towards the periphery of the conveyor disc (4, 5), in the form of recesses (6) which are curved out in such a way that a harvest material stalk moved thereto is easily introduced into the recess (6) by the catch strips (32) and upon further rotary movement of the conveyor discs (4, 5) has a tendency to remain therein because the curvature of the recess (6) continues to the tip of the conveyor prong (7) and partially embraces the stalk.

8. A cutting and conveyor mechanism according to claim 7 characterised in that the conveyor prongs (7) are so shaped with their conveying flank (8) that the outer tip thereof leads with respect to the radial direction in the direction of rotation.

9. A cutting and conveyor mechanism according to claims 7 and 8 characterised in that the conveyor prongs (7) are so shaped with their non-conveying flank (9) that the outer tip thereof trails with respect to the radial direction in the direction of rotation.

10. A cutting and conveyor mechanism according to claims 7 to 9 characterised in that the conveyor prongs (7) form with their outwardly directed end face (19) a run-in surface for the stalk material, which with its edge (20) that trails in the direction of rotation is disposed radially further inwardly than the leading tip (21) of the adjacent subsequent conveyor prong (7).

11. A cutting and conveyor mechanism according to one or more of claims 1 to 10 characterised in that, in the case of conveyor discs (4, 5) which are coaxially arranged in mutually superposed relationship, the conveyor prongs (7) which respectively convey together are displaced by a small amount relative to each other in the direction of rotation,

12. A cutting and conveyor mechanism according to one or more of claims 1 to 11 characterised in that, in the case of conveyor discs (4, 5) which are coaxially arranged in mutually superposed relationship the conveyor prongs (7) which respectively convey together are so displaced relative to each other in the direction of rotation that the upper conveyor prong (7) leads the lower conveyor prong (7) by a small amount.

## Revendications

1. Mécanisme de sectionnement et de convoyage pour produits de récolte à tiges, comprenant au moins un disque sectionneur et un ou plusieurs disques convoyeurs qui sont coaxiaux audit disque, et comportent une multiplicité de fourchons de convoyage disposés sur leur pourtour et auxquels est affecté, dans la zone de délivrance, un extracteur rotatif tournant dans la même direction que les disques convoyeurs et monté à l'intérieur de la circonférence décrite par les disques convoyeurs associés,
caractérisé par le fait
que l'extracteur (12, 13) est réalisé sous la forme d'un disque pourvu de dents (14), et dont les dents (14) recouvrent totalement, sur une partie de leur révolution, les alvéoles ouverts (6) des disques convoyeurs (4, 5) qui sont formés par les fourchons de convoyage (7).

2. Mécanisme de sectionnement et de convoyage selon la revendication 1,
caractérisé par le fait
qu'un extracteur propre (12, 13) est présent pour chaque disque convoyeur (4, 5).

3. Mécanisme de sectionnement et de convoyage selon les revendications 1 et 2,
caractérisé par le fait
que deux disques convoyeurs coaxiaux (4, 5), pour l'essentiel de configuration identique, sont agencés à distance l'un de l'autre, les extracteurs associés (12, 13) pouvant être interposés entre les deux disques convoyeurs (4, 5).

4. Mécanisme de sectionnement et de convoyage selon les revendications 1-3,
caractérisé par le fait
qu'une paroi fixe (15), formant un canal convoyeur (17) et s'étendant à faible distance des disques convoyeurs (4, 5) et des extracteurs (12, 13), est affectée aux disques convoyeurs (4, 5) et à leurs extracteurs (12, 13) à peu près perpendiculairement au plan desdits disques convoyeurs (4, 5).

5. Dispositif de sectionnement et de convoyage pour plantes à tiges, comprenant au moins un disque sectionneur rotatif (3) pourvu de lames (31) sur son pourtour, et un ou plusieurs disques convoyeurs (4, 5) placés au-dessus dudit disque et munis, sur leur pourtour, de fourchons de convoyage (7) et d'alvéoles de convoyage (6), le disque sectionneur (3) et les disques convoyeurs (4, 5) tournant à des vitesses périphériques différentes,
caractérisé par le fait
que des barrettes collectrices (32), dressées sur chant à intervalles les unes des autres, sont fixées au pourtour du disque sectionneur (3), à la face supérieure de ce dernier, et s'étendent selon un angle plat β par rapport à la tangente, la zone initiale d'attaque des barrettes collectrices (32) étant située, dans le sens radial, davantage à l'extérieur que l'extrémité de fuite.

6. Dispositif de sectionnement et de convoyage selon la revendication 5,
caractérisé par le fait
que les barrettes collectrices (32) s'étendent jusque dans la région des lames de sectionnement (31) dans leur zone initiale d'attaque, et jusque dans la région des indentations (6) des disques convoyeurs (4, 5) à leur extrémité de fuite.

7. Mécanisme de sectionnement et de convoyage selon les revendications 1 à 6,
caractérisé par le fait
que des fourchons adjacents de convoyage (7) des disques convoyeurs (4, 5) constituent, par leur flanc convoyeur (8) et avec le flanc non convoyeur (9) d'un fourchon de convoyage (7) voisin, un alvéole (6) ouvert en direction du pourtour du disque convoyeur (4, 5) et revêtant la forme d'indentations (6) qui sont bombées de façon telle qu'une tige de plante présentée soit aisément dirigée vers l'intérieur d'une indentation (6), par les barrettes collectrices (32), et ait tendance à y demeurer lors d'une poursuite de la rotation des disques convoyeurs (4, 5), étant donné que le bombement de l' indentation (6) se prolonge jusqu'à la pointe du fourchon de convoyage (7), et ceinture partiellement ladite tige de plante.

8. Mécanisme de sectionnement et de convoyage selon la revendication 7,
caractérisé par le fait
que les fourchons de convoyage (7) possèdent, sur leur flanc convoyeur (8), une configuration telle que la pointe extérieure dudit flanc soit en avancée par rapport à la ligne radiale dans la direction de rotation.

9. Mécanisme de sectionnement et de convoyage selon les revendications 7 et 8,
caractérisé par le fait
que les fourchons de convoyage (7) possèdent, sur leur flanc non convoyeur (9), une configuration telle que la pointe extérieure dudit flanc accuse un recul par rapport à la ligne radiale dans la direction de rotation.

10. Mécanisme de sectionnement et de convoyage selon les revendications 7-9,
caractérisé par le fait
que les fourchons de convoyage (7) forment, par leur face frontale (19) dirigée vers l'extérieur, une surface de pénétration du produit de récolte à tige qui est située radialement, par son bord (20) reculé dans la direction de rotation, davantage à l'intérieur que la pointe avancée (21) du fourchon de convoyage (7) voisin et successif.

11. Mécanisme de sectionnement et de convoyage selon l'une ou plusieurs des revendications 1-10,
caractérisé par le fait
que, dans le cas de disques convoyeurs (4, 5) agencés en super-position coaxiale, les fourchons de convoyage (7), assurant à chaque fois un convoyage conjoint, sont mutuellement décalés d'une faible distance dans la direction de rotation.

12. Mécanisme de sectionnement et de convoyage selon l'une ou plusieurs des revendications 1-11,
caractérisé par le fait
que, dans le cas de disques convoyeurs (4, 5) agencés en superposition coaxiale, les fourchons de convoyage (7) assurant à chaque fois un convoyage conjoint présentent, dans la direction de rotation, un décalage mutuel tel que le fourchon supérieur de convoyage (7) soit en avancée, d'une faible distance, par rapport au fourchon inférieur de convoyage (7).
